# EUROPÄISCHE PATENTSCHRIFT

(11) **EP 1 044 335 B1**
(45) Veröffentlichungstag und Bekanntmachung des Hinweises auf die Patenterteilung: **04.10.2001**
(21) Anmeldenummer: 99904699.8
(22) Anmeldetag: 06.01.1999
(51) Int. Cl.: F16B 47/00

(54) **SAUGHALTER MIT EINER ZUSATZEINRICHTUNG**
SUCTION CUP HOLDER WITH AN ADDITIONAL ELEMENT
DISPOSITIF DE FIXATION A VENTOUSE DOTE D'UN ELEMENT SUPPLEMENTAIRE

(30) Priorität: 10.01.1998 DE 19800675
(43) Veröffentlichungstag der Anmeldung: 18.10.2000
(73) Patentinhaber: Gian, Hung Chang, 14199 Berlin (DE)
(72) Erfinder: Gian, Hung Chang, 14199 Berlin (DE)
(74) Vertreter: Heitsch, Wolfgang
(86) Internationale Anmeldenummer: DE9900026
(87) Internationale Veröffentlichungsnummer: WO9935410

(56) Entgegenhaltungen:
- WO-A-97/33096
- DE-A- 2 659 684
- FR-A- 2 347 563
- GB-A- 2 274 135
- US-A- 2 817 482
- US-A- 3 638 878

## Beschreibung

Die Erfindung betrifft einen Saughalter mit einer Zusatzeinrichtung nach dem Oberbegriff des Anspruchs 1.

Bekannt sind verschiedene Saughalter, Saugfüße und Saugnäpfe, sämtlich als Unterdruck-Haltevorrichtungen mit verschiedenen Zusatzeinrichtungen ausgebildet. So zum Beispiel ein Saughalter, wie in der EP 0 276 830 A1 dargelegt, mit in einem im Basisteil des Saugnapfes, den Halte- bzw. Haftvorgang unterstützend, angeordneten Magneten der eine Befestigungsvorrichtung aufweist. Aus dem DE-Gebrauchsmuster 78 03 207 sind Saugvorrichtungen bekannt, an deren Tragzapfen ein Aufhängehaken als zusätzliche Einrichtung befestigt wird. In der DE 30 08 463 A1 wird ein Saugfuß mit einer Befestigungsvorrichtung für Warnleuchten auf einem Fahrzeugdach beschrieben. Eine weitere Befestigungsvorrichtung wird im DE-Gebrauchsmuster 295 10 539 vorgeschlagen, bei der eine Exzenterwelle, die zur Betätigung des Saugfußes vorhanden ist, zusätzlich Gegenstände haltern kann. Eine Hafthängevorrichtung wird in DE 40 13 747 A1 beschrieben, mit der durch eine luftsaugende Pumpe zur Verlängerung der Haftungsdauer und Erhöhung der Haftsicherheit Gegenstände an der luftsaugenden Pumpe aufgehängt werden können. Eine Haftsaugerhalterung speziell für Aquariengeräte mit konisch verlaufenden Stopfen zum Halten von Gegenständen wird in DE 42 14 249 A1 vorgestellt. Einschraubbare Befestigungsmittel in einem Saugfuß sieht die DE 41 30 107 A1 vor. Einen speziellen Saughalter mit einem senkrecht zur Anlagefläche verschiebbar angeordneten Zapfen zum Haltern von Gegenständen enthält die DE 41 23 910 C1.

Alle diese hier erwähnten Saughalter weisen sämtlich irgendeine, einen speziellen Zweck erfüllende Zusatzeinrichtung auf. Im wesentlichen dienen sie zum Anhängen, Einschrauben, Anheben, starren Befestigen oder Aufnehmen von Gegenständen. Keine der bekannten Vorrichtungen ist dafür geeignet, Gegenstände, die nicht unmittelbar mit dem Saughalter in Verbindung stehen, zu haltern. Keiner der bekannten Saughalter ist geeignet, Gegenstände zu fixieren, die in einem wahlweise unbestimmten Abstand vom Saughalter zu fixieren sind.
Das Gebrauchsmuster DE 86 12 888 U1 beinhaltet eine Leine mit einer automatischen Aufrollvorrichtung. Hierin ist mindestens ein Ende der Leine mit einem Sauger verbunden. Das Aufrollgehäuse, welches die Aufrollvorrichtung enthält, ist jedoch den Gebrauch störend zwischen den Enden der Aufhängepunkte angeordnet. Desweiteren muß die Entfernung zwischen den Befestigungspunkten größer sein, als die Ausdehnung des Aufrollgehäuses. Für geringere Distanzen ist somit ein Einsatz nicht möglich.

Aufgabe der Erfindung ist es, eine einfache, leicht handhabbare und vielseitig einsetzbare Saughaltervorrichtung zu schaffen, die geeignet ist, Gegenstände indirekt - also außerhalb des Bereichs des Saughalters und wahlweise in unterschiedlicher und beliebiger Entfernung von diesem - zu fixieren.

Erfindungsgemäß wird diese Aufgabe durch den Saughalter mit den Merkmalen des Patentanspruchs 1 gelöst. Der Saughalter besteht vorzugsweise aus einem Sockel mit einer daran angebrachten elastischen Membran, an deren Peripherie Lippen angeordnet sind und einer zentral durch den Sockel senkrecht zu einer Anlagefläche verlaufenden Evakuierungsvorrichtung. Die Evakuierungsvorrichtung ist über ein Zugelement mit der Membran verbunden und mittels einem Aktivator bewegbar, welcher oberhalb einer Kammer um die Evakuierungsvorrichtung drehbar gelagert ist. In der Kammer befindet sich ein Zugspannung erzeugender Rückholmechanismus mit daran angeordnetem flexiblen, ausziehbaren und in seiner Arbeitslänge unterschiedlich arretierbaren Befestigungsmittel. Erfindungsgemäß ist das Befestigungsmittel ein Stahlband, ein Drahtseil, ein Gummiband, ein Textilgewirk oder ein Kunststoffband an dessen jeweils freien Ende wahlweise eine Einhakvorrichtung oder ein weiterer Saughalter angeordnet ist, in dessen Gehäuse das Befestigungsmittel wiederum am Rückholmechanismus angelenkt ist.

Die vorteilhaften Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen schutzfähige Ausführungen darstellen, für die hier Schutz beansprucht wird.

Ein Ausführungsbeispiel der Erfindung ist in den Zeichnungen dargestellt.

In den Zeichnungen zeigen
- Fig. 1: Draufsicht auf einen Saughalter
- Fig. 2: Schnitt nach B-B durch einen Saughalter nach Fig. 1
- Fig. 3: Draufsicht auf eine Kammer nach Schnittlinie A-A
- Fig. 4: perspektivische Ansicht eines abgewandelten Ausführungsbeispiels nach Fig. 1 bis 3

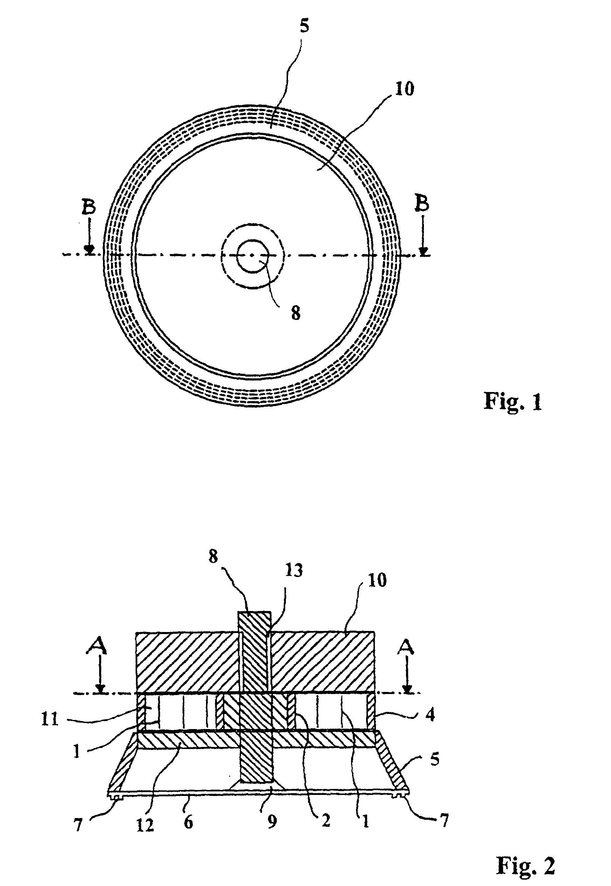

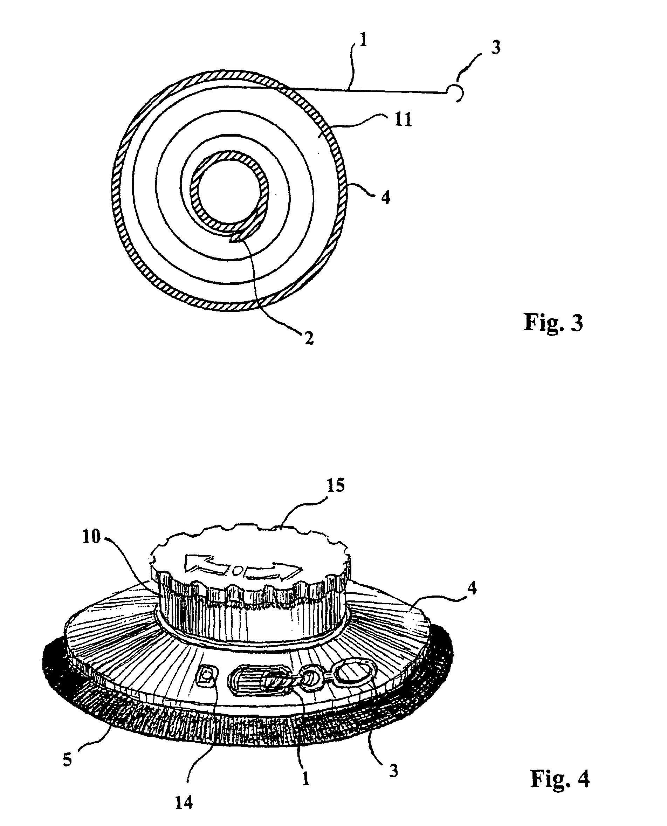

Fig. 1 zeigt eine Draufsicht auf einen Saughalter mit im Zentrum befindlicher Evakuierungsvorrichtung **8,** einen um diese gelagerten Aktivator **10** und an dessen Peripherie rundum laufenden Sockel **5.** Der Aufbau des Saughalters wird an dem Schnitt B-B durch den Saughalter in Fig. 2 näher erläutert. Auf einer (in der Figur nicht dargestellten) Anlagefläche liegen die an der Peripherie der Membran **6** angeordneten Lippen **7**. Die Membran **6** ist an ihrem Umfang mit dem Sockel **5** verbunden. Mittig der Membran **6** ist mit dieser ein Zugelement **9** fest verbunden. Das Zugelement **9** ist an der Evakuierungsvorrichtung **8** angeordnet. Die Evakuierungsvorrichtung **8** führt senkrecht zur Anlagefläche durch die Sockelplatte **12** durch eine darüberliegende Kammer **11** mittig durch einen Aktivator **10** hindurch. Durch Drehung des Aktivators **10** hebt sich über das Schraubgewinde **13** die Evakuierungsvorrichtung **8,** so daß das Zugelement **9** die Membran **6** anhebt und zwischen Membran **6** bzw. den Lippen **7** und einer Anlagefläche ein Unterdruck entsteht, der die sichere Haftung des Saughalters am Untergrund gewährleistet. Entsprechende (in den Figuren nicht dargestellte) Dichtungselemente zwischen Sockelplatte **12,** Evakuierungsvorrichtung **8** und Kammer **11** gewährleisten den Fortbestand des Unterdrucks.
Zwischen dem Aktivator **10** und der Sockelplatte **12** ist die Kammer **11** bestehend aus einem äußeren Gehäuse **4** und einem inneren Gehäusering mit Rückholmechanismus **2** und darin angelenktem Befestigungsmittel **1** mit am Ende befindlicher Einhakvorrichtung **3** angeordnet, wie in Fig. 3 dargestellt. Nachdem der Saughalter mittels Evakuierungsvorrichtung 8 und Aktivator **10** an einem Untergrund saugend gehaltert wurde, kann das Befestigungsmittel **1** aus einer Öffnung im Gehäuse **4** herausgezogen und bei einer bestimmten Auszugslänge mittels Arretierknopf **14** (Fig. 4) festgelegt werden. So kann erfindungsgemäßer Saughalter mit Zusatzeinrichtung für die Befestigung von Gegenständen benutzt werden, die sich im oder am Pkw befinden oder die über die Länge eines Pkw hinausragen, indem der Saughalter beispielsweise auf der hinteren Scheibe oder der Kofferraumklappe befestigt und das Befestigungsmittel **1** aus der Kammer **11** gezogen wird, um eine wegen eines herausragenden Gegenstandes nicht vollständig geschlossene Kofferhaube am Abschlepphaken zu arretieren. Dabei sorgt der Rückholmechanismus **2** für eine entsprechende Verspannung. Ist diese erreicht, so wird der Arretierknopf **14** zum Halten des Befestigungsmittels **1** gedrückt. Zum Lösen des Befestigungsmittels **1** wird wiederum der Arretierknopf **14** gedrückt, und die Einhakvorrichtung **3** kann gelöst und das Befestigungsmittel **1** zurückgespult werden. Im Bereich der Erfindung liegt es, als Befestigungsmittel vorzugsweise ein Gummiseil zu verwenden. Denkbar ist aber auch die Verwendung von Stahlband, Drahtseil, Textilgewirk oder von Kunststoffbändern.

Eine besondere Ausgestaltungsform zeigt die Fig. 4. Sie zeigt die perspektivische Ansicht eines Saughalters, bei dem der Aktivator **10** die Evakuierungsvorrichtung **8** überdeckend und über den Rand des Aktivators **10** hinausreichend einen Griffrand **15** aufweist. Die innerhalb des Gehäuses **4** befindliche Kammer **11** ist als flacher Kegelstumpf ausgebildet und hat somit geringeren Rauminhalt als die in Fig. **2** dargestellte Kammer **11.** Diese Art Saughalter ist zur Aufnahme von Befestigungsmitteln **1,** vorzugsweise eines Gummiseils von einer Länge, die zur Halterung von Gegenständen am Pkw ausreichend ist, vorgesehen.

Der erfindungsgemäße Saughalter mit einer Zusatzeinrichtung wurde anhand der konkreten Ausführungsvariante erläutert. Es sei aber vermerkt, daß die vorliegende Erfindung nicht auf die Einzelheiten der Beschreibung im Ausführungsbeispiel eingeschränkt ist, da im Rahmen der Patentansprüche Änderungen und Abwandlungen beansprucht werden. So liegt es beispielsweise im Bereich der Erfindung, am Befestigungsmittel **1** anstelle einer Einhakvorrichtung **3** einen weiteren erfindungsgemäßen Saughalter anzubringen, um ein Haltern von Gegenständen an Unterlagen, an denen keine Einhakvorrichtungen vorhanden sind, zu ermöglichen.

## Patentansprüche

1. Saughalter mit einer Zusatzeinrichtung, bestehend aus einem Grundteil, einem flexiblen Saugfuß, der an einer Anlagefläche dichtend anlegbar ist und durch dessen Andruck und Mechanik der die Haltekraft erzeugende Unterdruck herstellbar ist, und einer flexiblen, ausziehbaren, in seiner Arbeitslänge unterschiedlich arretierbaren Befestigungsmittel **(1)**, wobei das Befestigungsmittel **(1)** mit einem Zugspannung erzeugenden Rückholmechanismus **(2)** korrespondiert, **dadurch gekennzeichnet, daß** der Rückholmechanismus **(2)** im Gehäuse des Saughalters integriert ist.

2. Saughalter nach Anspruch 1, **dadurch gekennzeichnet, daß** das Befestigungsmittel **(1)** ein Stahlband oder ein Drahtseil oder ein Gummiband oder ein Textilgewirk oder ein Kunststoffband ist.

3. Saughalter nach Anspruch 1 oder 2, **dadurch gekennzeichnet, daß** an dem Befestigungsmittel **(1)** wahlweise eine Einhakvorrichtung **(3)** oder ein weiterer Saughalter angeordnet ist, in dessen Gehäuse **(4)** das Befestigungsmittel **(1)** am Rückholmechanismus **(2)** angelenkt ist.

4. Saughalter nach Anspruch 1, **gekennzeichnet durch**
- eine an einem Sockel **(5)** angebrachte und diesen abdichtende elastische Membran **(6)** mit an ihrer Peripherie verlaufenden Lippen **(7),**
- eine zentral **durch** den Sockel **(5)** senkrecht zu einer Anlagefläche verlaufende Evakuierungsvorrichtung **(8),** die über ein Zugelement **(9)** mit der Membran **(6)** verbunden ist,
- die Evakuierungsvorrichtung **(8)**, die mit einem Aktivator **(10)** bewegbar ist, welcher oberhalb einer Kammer **(11)** um die Evakuierungsvorrichtung **(8)** drehbar gelagert ist, und
- ein in der Kammer **(11)** an einem Rückholmechanismus **(2)** angelenktes Befestigungsmittel **(1)**, welches ausziehbar aufgespult und mittels Arretierknopf **(14)** feststellbar angeordnet ist.

5. Saughalter nach einem oder mehreren der vorangegangenen Ansprüche, **dadurch gekennzeichnet, daß** der Aktivator **(10)** zwischen der Kammer **(11)** und einer Sockelplatte **(12)** angeordnet ist.

6. Saughalter nach Anspruch 4, **dadurch gekennzeichnet, daß** die Evakuierungsvorrichtung **(8)** und der Aktivator **(10)** als Exzenter oder Kniehebel oder Gewinde oder Feder oder als elastomere Glieder miteinander korrespondierend ausgebildet sind.

## Claims

1. Suction cup holder with an additional element, consisting of a basic portion, a flexible suction bottom which can be applied tightening on an applying area and gives a stress and mechanism by which the vacuum which makes the holding force is producable, further consisting of flexible, retractable fixing means **(1)** that can be locked at different working lengths, the fixing means **(1)** corresponding with a restoring mechanism **(2)** generating a tensile stress, where the restoring mechanism **(2)** is integrated in the housing of the suction cup.

2. Suction cup holder according to claim 1, where the fixing means **(1)** is a steel band or a cord or a rubber band or a knit fabric or plastic band.

3. Suction cup holder according to claim 1 or 2, where a hook-on device **(3)** or a further suction cup holder is optionally arranged to the fixing means **(1),** fixing means **(1)** located in the housing **(4)** of said suction cup holder are coupled to the restoring mechanism **(2).**

4. Suction cup holder according to claim 1, having
- an elastic membrane **(6)** applied on a base **(5)** and tightening the same, having lips **(7)** on its periphery,
- an evacuation device **(8)** applied centrally through the base **(5)** and vertically to an applying area and being connected with the membrane **(6)** by a traction element **(9)**,
- the evacuation device **(8)** which can be moved by an activator **(10)**, said activator being mounted in such a way that it can rotate around the evacuation device **(8),** and
- fixing means **(1)** being coupled to a restoring mechanism **(2)** in chamber **(11)** and being retractably spooled and arrestably arranged by a locking button **(14).**

5. Suction cup holder according to one or several of the aforementioned claims, where the activator **(10)** is arranged between chamber **(11)** and a base plate **(12).**

6. Suction cup holder according to claim 4, where the evacuation device **(8)** and the activator **(10)** are arranged as eccentric cam or toggle lever or thread or spring or as elastomere links corresponding with each other.

## Revendications

1. Support à ventouse comportant une installation accessoire formée d'une pièce de base, d'un pied d'aspiration souple qui s'applique de manière étanche contre une surface d'appui et dont la pression d'application et le mécanisme créent la dépression engendrant la force d'accrochage, ainsi qu'un moyen de fixation (1) souple, extractible, qui peut se bloquer différemment sur sa longueur de travail, le moyen de fixation (1) correspondant à un mécanisme de rappel (2) créant une traction,
**caractérisé en ce que**
le mécanisme de rappel (2) est intégré dans le boîtier du support à ventouse.

2. Support à ventouse selon la revendication 1,
**caractérisé en ce que**
le moyen de fixation (1) est un ruban d'acier ou un câble d'acier ou un ruban en caoutchouc ou un tissu textile ou un ruban en matière plastique.

3. Support à ventouse selon l'une quelconque des revendications 1 ou 2,
**caractérisé en ce que**
le moyen de fixation (1) comporte un dispositif d'accrochage (3) ou un autre support à ventouse dont le boîtier (4) loge le moyen de fixation (1) articulé sur le mécanisme de rappel (2).

4. Support à ventouse selon la revendication 1,
**caractérisé par**
- une membrane élastique (6) fixée à un socle (5) et assurant son étanchéité, avec une lèvre (7) périphérique,
- un dispositif de mise sous vide (8) traversant de manière centrale le socle (5) perpendiculairement à une surface d'appui, ce dispositif étant relié par un élément de traction (9) à la membrane (6),
- le dispositif de mise sous vide (8) pouvant être déplacé à l'aide d'un actionneur (10) monté à rotation au-dessus d'une chambre (11) autour du dispositif de mise sous vide (8) et
- un moyen de fixation (1) dans la chambre (11) articulé sur un mécanisme de rappel (2) et qui est enroulé de manière extractible et peut se bloquer à l'aide d'un bouton de blocage (14).

5. Support à ventouse selon l'une ou plusieurs des revendications précédentes,
**caractérisé en ce que**
l'actionneur (10) est installé entre la chambre (11) et une plaque formant socle (12).

6. Support à ventouse selon la revendication 4,
**caractérisé en ce que**
le dispositif de mise sous vide (8) et l'actionneur (10) sont réalisés sous la forme d'excentiques. de leviers à genouillère, de filetages, de ressorts, ou d'éléments en élastomère qui se correspondent.
